# EUROPÄISCHE PATENTANMELDUNG

(11) **EP 3 444 685 A1**
(43) Veröffentlichungstag der Anmeldung: **20.02.2019**
(21) Anmeldenummer: 18168399.6
(22) Anmeldetag: 20.04.2018
(51) Int. Cl.: G05B 19/401, G05B 19/418, B25J 9/16

(54) **FERTIGUNGSZELLE UND VERFAHREN ZUM RÜSTEN EINER FERTIGUNGSZELLE**

(30) Priorität: 17.08.2017 DE 102017118761
(71) Anmelder: CLAAS Selbstfahrende Erntemaschinen GmbH, 33428 Harsewinkel (DE)
(72) Erfinder: Parshin, Artemiy, 350039 Krasnodar (RU)
(74) Vertreter: CLAAS Gruppe

(57) **Zusammenfassung**

Die vorliegende Erfindung betrifft eine Fertigungszelle (20), bestehend aus einem Bearbeitungssystem (1), einem Materialflusssystem (2) und einem Informationssystem (3), wobei das Materialflusssystem (2) eine von dem Informationssystem (3) angesteuerte Handhabungseinrichtung (4) umfasst, die zu einer automatischen Auswechslung von Werkzeug (14) des Bearbeitungssystems (1) eingerichtet ist, welches dem Materialflusssystem (2) durch eine Speichereinrichtung (8, 8') zuführbar ist,
- wobei die Speichereinrichtung (8,8') im Arbeitsraum (17) der Handhabungseinrichtung (4) für die Dauer eines Rüstvorganges positionierbar ist,
- wobei die Handhabungseinrichtung (4) eine optische Detektionseinrichtung (6) aufweist, welche zur Erfassung zumindest einer an der Speichereinrichtung (8, 8') angeordneten Markierung (13) sowie zur Erfassung der Anordnung von einem oder mehreren in der Speichereinrichtung (8, 8') angeordneten Werkzeugen (14) eingerichtet ist,
- und wobei durch das Informationssystem (3) die relative Lage des wenigstens einen Werkzeugs (14) bezogen auf die zumindest eine wiedererkannte Markierung an der Speichereinrichtung bei einer ortsunabhängigen Repositionierung (13) der Speichereinrichtung (8, 8') bestimmbar ist.

## Beschreibung

Die vorliegende Erfindung betrifft eine Fertigungszelle gemäß dem Oberbegriff des Anspruches 1 sowie ein Verfahren zum Rüsten einer Fertigungszelle gemäß dem Oberbegriff des Anspruches 11.

Die Druckschrift DE 10 2012 112 025 B4 offenbart eine Fertigungszelle mit einem ersten Industrieroboter, der eine daran angeordnete werkzeugaufnehmende Einrichtung zur Bearbeitung eines Werkstücks umfasst, und einem zweiten Industrieroboter. Die Positionserfassung erfolgt mittels einer an dem ersten Industrieroboter angeordneten optischen Messeinrichtung, welche Markierungen an dem zweiten Industrieroboter erfasst, um die relative Position für eine präzise Positionierung der werkzeugaufnehmenden Einrichtung möglichst genau zu bestimmen. Als Markierungen sind Markierungen oder Reflektoren an dem zweiten Industrieroboter vorgesehen, welche mittels der optischen Messeinrichtung erfasst und ausgewertet werden. Während der Bewegung des ersten Industrieroboters relativ zu dem Werkstück bleibt die Position des zweiten Industrieroboters stationär, um temporär einen festen Bezugspunkt für den ersten Industrieroboter zu bilden. Hierfür ist es jedoch Voraussetzung, dass der zweite Industrieroboter derart positioniert ist, dass eine Sichtlinie für einen von der optischen Messeinrichtung ausgesandten elektromagnetischen Strahl nicht gestört ist und somit eine Bestimmung der relativen Position des ersten Industrieroboters zu dem zweiten Industrieroboter möglich ist.

Eine Fertigungszelle der eingangs genannten Art besteht aus einem Bearbeitungssystem, einem Materialflusssystem und einem Informationssystem. Das Materialflusssystem umfasst das Bereitstellen von zu bearbeitenden Werkstücken, das Zuführen der Werkstücke zum Bearbeitungssystem sowie das Abführen aus dem Bearbeitungssystem und das Ablegen der bearbeiteten Werkstücke. Das Materialzuführungssystem umfasst hierzu eine von dem Informationssystem angesteuerte Handhabungseinrichtung. Das Zuführen der zu bearbeitenden Werkstücke sowie das Abführen der bearbeiteten Werkstücke durch die Handhabungseinrichtung erfolgt durch das Aufnehmen von und Ablegen auf ortsfesten Speicherstellen. Dabei kann es sich um Paletten, Gestelle oder sonstige Einrichtungen handeln, die eine Bereitstellung von Werkstücken in der Weise ermöglichen, dass diese durch die Handhabungseinrichtung zugänglich sind. Die Handhabungseinrichtung ist zu einer automatischen Auswechslung von Werkzeug des Bearbeitungssystems eingerichtet, welches dem Materialflusssystem durch eine Speichereinrichtung zuführbar ist. Zum Rüsten des Bearbeitungssystems durch die Handhabungseinrichtung wird aus der der Fertigungszelle zugeführten Speichereinrichtung ein Werkzeug aufgenommen. Da die Bereitstellung der Speichereinrichtung mit Werkzeug im Allgemeinen lediglich für die Dauer des Rüstvorgangs erforderlich ist, ist es aus ökonomischen Gründen sinnvoll, diesen Platz außerhalb der Rüstzeiten freizugeben. Das Positionieren sowie spätere Repositionieren der Speichereinrichtung führt dazu, dass die dem Informationssystem nach einer ersten Positionierung bekannten Koordinaten zur Ansteuerung der Handhabungseinrichtung mit den sich bei der Repositionierung der Speichereinrichtung einstellenden Koordinaten nicht mehr übereinstimmen.

Das Verfahren bzw. die Vorrichtung gemäß der DE 10 2012 112 025 B4 benötigt zur Bestimmung der Position einen stationären Bezugspunkt, welcher aufgrund der ortsunabhängigen Positionierung der Speichereinrichtung bei einer Fertigungszelle der eingangs genannten Art fehlt.

Somit ist es die Aufgabe der vorliegenden Erfindung, eine Fertigungszelle sowie ein Verfahren zum Rüsten einer Fertigungszelle bereitzustellen, welche bei einer Repositionierung einer Speichereinrichtung für Werkzeug ein verlässliches Wiederauffinden von Werkzeug durch die Handhabungseinrichtung der Fertigungszelle ermöglichen.

Diese Aufgabe wird erfindungsgemäß hinsichtlich einer Fertigungszelle durch die Merkmale des Anspruches 1 sowie bezüglich eines Verfahrens zum Rüsten einer Fertigungszelle durch die Merkmale der unabhängigen Anspruchs 11 gelöst.

Vorteilhafte Weiterbildungen sind Gegenstand der von den unabhängigen Ansprüchen 1 und 11 abhängigen Unteransprüche.

Gemäß Anspruch 1 wird eine Fertigungszelle, bestehend aus einem Bearbeitungssystem, einem Materialflusssystem und einem Informationssystem vorgeschlagen, wobei das Materialflusssystem eine von dem Informationssystem angesteuerte Handhabungseinrichtung umfasst, die zu einer automatischen Auswechslung von Werkzeug des Bearbeitungssystems eingerichtet ist, welches dem Materialflusssystem durch eine Speichereinrichtung zuführbar ist. Unter einer Fertigungszelle wird eine Bearbeitungsmaschine verstanden, die auf Grundlage einer Steuerung, insbesondere CNC-Steuerung, Werkstücke positioniert und ihre Teil- oder Komplettbearbeitung übernimmt und bei Bedarf automatisch Werkzeuge wechselt. Dem Materialflusssystem kommt die Aufgabe zu, die zu bearbeitenden Werkstücke vollautomatisiert von einem Werkstückspeicher dem Bearbeitungssystem zuzuführen. Die Steuerung des Bearbeitungssystems sowie des Materialflusssystems erfolgt zumindest teilweise durch das Informationssystem.

Um bei einer ortsunabhängigen Repositionierung der Speichereinrichtung ein automatisches Rüsten des Bearbeitungssystems mit einem Werkzeug schnell und zuverlässig durchführen zu können, ist vorgesehen, dass die Speichereinrichtung im Arbeitsraum der Handhabungseinrichtung für die Dauer eines Rüstvorganges positionierbar ist, dass die Handhabungseinrichtung eine optische Detektionseinrichtung aufweist, welche zur Erfassung zumindest einer an der Speichereinrichtung angeordneten Markierung sowie zur Erfassung der Anordnung von einem oder mehreren in der Speichereinrichtung angeordneten Werkzeugen während der Positionierung eingerichtet ist, und dass durch das Informationssystem die relative Lage des wenigstens einen Werkzeugs bezogen auf die zumindest eine wiedererkannte Markierung an der Speichereinrichtung bei einer ortsunabhängigen Repositionierung der Speichereinrichtung bestimmbar ist. Die sich bei der ortsunabhängigen Repositionierung ändernden absoluten Ortskoordinaten werden durch Koordinaten in einem relativen Koordinatensystem ersetzt, dessen Bezugspunkt die zumindest eine Markierung an der Speichereinrichtung bildet. Hierzu bestimmt das Informationssystem mittels der optische Detektionseinrichtung bei der Positionierung der Speichereinrichtung die relativen Koordinaten des zumindest einen Werkzeugs in der Speichereinrichtung zu dem von der zumindest einen Markierung gebildeten Bezugspunkt. Somit bedarf es lediglich des Wiedererkennens der zumindest einen Markierung, damit das Informationssystem anhand der hinterlegten relativen Koordinaten die Lage des zumindest einen Werkzeugs ermitteln kann. Eine solche Fertigungszelle zeichnet sich durch eine flexiblere und ökonomischere Nutzung des Arbeitsraums aus.

Bevorzugt kann die zumindest eine Markierung in einer Ansicht im Wesentlichen von oben auf die Speichereinrichtung erkennbar sein. Die Handhabungseinrichtung verwendet im Allgemeinen eine Kinematik, die einen Zugriff auf ein Werkstück oder Werkzeug aus einer hierzu im Wesentlichen senkrechten Richtung vorsieht. Dazu ist endseitig an der Handhabungseinrichtung eine Aufnahmeeinrichtung angeordnet. Die Anordnung der optischen Detektionseinrichtung kann benachbart zu der Aufnahmeeinrichtung erfolgen, wobei diese ebenfalls im Wesentlich aus einer senkrechten Richtung auf die Speichereinrichtung blickt.

Insbesondere kann die zumindest eine Markierung in einer zur Empfangs- oder Bildebene der optische Detektionseinrichtung parallelen Ebene an der Speichereinrichtung angeordnet sein. Hierdurch wird ein sehr präziser Erfassung und Erkennung der zumindest einen Markierung erreicht.

Bevorzugt kann die zumindest eine Markierung eine optisch auswertbare Information über die Orientierung der Speichereinrichtung relativ zu der Handhabungseinrichtung aufweisen. Dies ist von Bedeutung, wenn die Speichereinrichtung bei der ortsunabhängigen Repositionierung nicht die gleiche Ausrichtung in der Ebene aufweist, wie dies bei der Positionierung der Fall war. In einer einfachen Ausführungsform kann die zumindest eine Markierung eine geometrische Form aufweisen, die einen Rückschluss auf die jeweilige Orientierung der Speichereinrichtung relativ zu der Handhabungseinrichtung ermöglicht. Insbesondere kann die zumindest eine Markierung der Kontur eines von der Fertigungszelle zu bearbeitenden Werkstücks nachempfunden sein. Auf diese Weise wird der Prozess der Erkennung der zumindest einen Markierung vereinfacht. Insbesondere für Fertigungszellen, deren optische Detektionseinrichtung bzw. Informationssystem lediglich auf eine bestimmte Beschaffenheit eines zu bearbeitenden Werkstücks abstellt, wie der geometrischen Form, ist diese Ausgestaltung der zumindest einen Markierung sinnvoll, da das Werkzeug in der Regel eine von dem zu bearbeitenden abweichende Geometrie aufweist, die von der Bildauswertung des Informationssystems nicht erkennbar ist. Alternativ oder zusätzlich kann die zumindest eine Markierung als eine ein- oder mehrfarbige Farbkennzeichnung ausgebildet sein. Denkbar ist auch die Ausführung der zumindest einen Markierung als ein QR-Code.

Vorzugsweise kann die optische Detektionseinrichtung als eine Kamera ausgebildet sein. Durch die als Kamera ausgebildete optische Detektionseinrichtung kann ein Referenzbild der Speichereinrichtung und des darin enthaltenen Werkzeugs aufgenommen werden. Die zumindest eine Markierung bildet den Bezugspunkt, des relativen Koordinatensystems, innerhalb dessen die Lage des zumindest einen in der Speichereinrichtung angeordneten Werkzeugs festgelegt wird. Bei einer Repositionierung der Speichereinrichtung wird erneut ein Bild aufgenommen, wobei lediglich der durch die zumindest eine Markierung gebildete Bezugspunkt detektiert wird. Die Position des zumindest einen Werkzeugs wird von dem Informationssystem mit Hilfe der gespeicherten relativen Koordinaten ermittelt. Besonders bevorzugt kann die Kamera als 3D-Kamera ausgeführt sein.

Des Weiteren kann die Speichereinrichtung wenigstens einen separierten Bereich zur Aufnahme eines einzelnen Werkzeugs aufweisen. Der separierte Bereich kann durch Stege, Wände oder dergleichen abtrennbar sein. Hierdurch lässt sich die Bestimmung der Lage bzw. Anordnung von Werkzeugen in Bezug auf die zumindest eine Markierung einfacher durchführen. Zudem wird die Entnahme des Werkzeugs durch die Handhabungseinrichtung vereinfacht, wenn bei mehreren Werkzeugen diese nicht nur räumlich beabstandet angeordnet sind, sondern zusätzlich physisch voneinander getrennt sind.

Gemäß einer Vorteilhaften Ausführungsform kann die Speichereinrichtung einen umlaufenden Rahmen, mit einer abschnittsweise flächig ausgebildeten, zum Rahmen unter einem Winkel geneigt angeordneten, Oberkante aufweisen. Die abschnittsweise flächig ausgebildete Oberkante ermöglich eine einfache Anordnung der zumindest einen Markierung. Die unter einem Winkel zum Rahmen geneigte Anordnung gewährleistet eine Ausrichtung der zumindest einen Markierung, in diese in einer zu der Empfangs- oder Bildebene der optische Detektionseinrichtung parallelen Ebene angeordnet ist.

Bevorzugt kann die Handhabungseinrichtung entlang einer definierbaren Bahn ortsveränderbar beweglich sein. Das heißt, die Handhabungseinrichtung kann entlang der definierbaren Bahn ihre Position relativ zu dem Bearbeitungssystem verändern. Dies kann insbesondere dann erforderlich sein, wenn Werkstücke von Speicherstellen aufgenommen bzw. abgelegt werden müssen, die einen Abstand zueinander aufweisen, der durch eine rein rotatorische Bewegung der Handhabungseinrichtung nicht überbrückbar ist.

Insbesondere kann die Fertigungszelle als Biegezelle ausgebildet sein. Die Biegezelle kann eine einzelne Handhabungseinrichtung, insbesondere in Form genau eines Mehrachsroboters, umfassen.

Des Weiteren wird die eingangs gestellt Aufgabe durch ein Verfahren gemäß dem unabhängigen Anspruch 11 gelöst. Beansprucht wird ein Verfahren zum Rüsten einer Fertigungszelle, bestehend aus einem Bearbeitungssystem, einem Materialflusssystem und einem Informationssystem, wobei das Materialflusssystem eine Handhabungseinrichtung umfasst, die von dem Informationssystem angesteuert wird, wobei durch die Handhabungseinrichtung eine automatischen Auswechslung eines Werkzeugs des Bearbeitungssystems durchgeführt wird, welches dem Materialzuführungssystem durch eine Speichereinrichtung bereitgestellt wird. Das Verfahren ist dadurch gekennzeichnet, dass in einem ersten Schritt die mit wenigstens einem auszuwechselnden Werkzeug bestückte, mit zumindest einer Markierung versehene, Speichereinrichtung im Arbeitsraum der Handhabungseinrichtung für die Dauer eines Rüstvorganges ortsunabhängig positioniert wird. Anschließend wird in einem zweiten Schritt die zumindest eine Markierung sowie die Anordnung des wenigstens einen Werkzeugs in der Speichereinrichtung relativ zu der Markierung optisch erfasst. Dabei wird die zumindest eine Markierung als relativer Bezugspunkt zur Positionsbestimmung des wenigstens einen in der Speichereinrichtung angeordneten Werkzeugs bei einer ortsunabhängigen Repositionierung der Speichereinrichtung verwendet.

Bevorzugt kann die Lage des wenigstens einen Werkzeugs bezogen auf die zumindest eine Markierung als Koordinaten eines relativen Koordinatensystems gespeichert werden.

Insbesondere kann nach der Repositionierung der Speichereinrichtung ein Bild der Speichereinrichtung aufgenommen und mittels der zumindest einen Markierung die relative Lage der repositionierten Speichereinrichtung bestimmt werden. Durch das Detektieren der zumindest einen Markierung sind auftretende rotatorische und translatorische Abweichungen aufgrund der Repositionierung der Speichereinrichtung bestimmbar. Die zumindest eine Markierung wird als Bezugspunkt zur Bestimmung der Lage des zumindest einen Werkzeugs verwendet, ohne dabei das Werkzeug selbst identifizieren zu müssen. Zudem kann die zumindest eine Markierung zur Wiedererkennung der Speichereinrichtung verwendet.

Vorteilhaft ist es, dass eine Detektierung der zumindest einen Markierung durch ein Bildauswertungsprogramm erfolgt, welches zur Detektion der Lage von zu bearbeitenden Werkstücken verwendet wird.

Die vorliegende Erfindung wird nachstehend anhand eines in den Zeichnungen dargestellten Ausführungsbeispieles näher erläutert.

Es zeigen:
- Fig. 1: eine schematische Ansicht der Struktur einer Fertigungszelle;
- Fig. 2: eine schematische Ansicht einer Speichereinrichtung;
- Fig. 3: ein Flussdiagramm zur Veranschaulichung eines Werkzeugrüstprozesses.

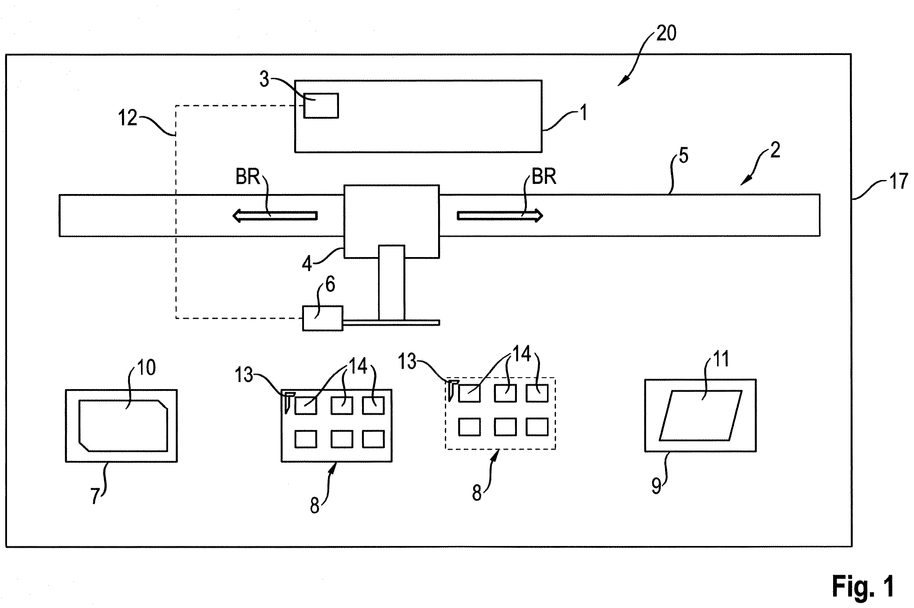

In Fig. 1 ist eine schematische Ansicht der Struktur einer Fertigungszelle dargestellt. Die beispielhaft als eine Biegezelle 20 ausgeführte Fertigungszelle umfasst ein Bearbeitungssystem 1, ein Materialflusssystem 2 und ein Informationssystem 3. Das Bearbeitungssystem 1 ist als eine Biegepresse ausgeführt. Das Materialflusssystem 2 ist im dargestellten Ausführungsbeispiel als eine Handhabungseinrichtung 4, insbesondere in Form eines Mehrachsroboters, welcher entlang eines vorgegebenen Verfahrweges 5, wie durch Pfeile BR angedeutet, verfahrbarer ist. Der Verfahrweg 5 ist dabei nicht auf einen ausschließlich gerade verlaufenden Verfahrweg beschränkt.

Die Handhabungseinrichtung 4 ist mit einer Aufnahmevorrichtung ausgestattet, die beispielsweise als Zangengreifer, Saugreifer oder dergleichen ausgeführt ist. Weiterhin ist der Handhabungseinrichtung 4 eine optische Detektionseinrichtung 6 zugeordnet, welche dem Auffinden von auf einem Werkstückspeicher 7 bereitgestellten, zu bearbeitenden Werkstücken 10 wie einem Blechzuschnitt dient, die dem Bearbeitungssystem 1 zur Bearbeitung durch die Handhabungseinrichtung 4 zugeführt werden sollen. Die Anordnung des zumindest einen Werkstückspeichers 7 ist in einem Arbeitsraum 17 der Handhabungseinrichtung 4 vorgesehen. Unter dem Begriff Arbeitsraum 17 wird der von der Handhabungseinrichtung 4 erreichbare Raum verstanden, innerhalb dessen die Handhabungseinrichtung 4 mit Werkstücken 10 oder dergleichen störungsfrei hantieren kann. Zum Auffinden und Aufnehmen des jeweiligen zu bearbeitenden Werkstücks 10 wird mittels der optischen Detektionseinrichtung 6, die als Kamera ausgebildet ist, das aufzunehmende Werkstück 10 fotografiert. Anhand einer Bildauswertung, die mittels eines geeigneten Programms zur Bildauswertung durch das Informationssystem 3 durchgeführt wird, werden die Koordinaten des betreffenden Werkstücks 10 bestimmt, um es dann durch die Handhabungseinrichtung 4 aufzunehmen und dem Bearbeitungssystem 1 zuzuführen.

Von dem Bearbeitungssystem 1 bearbeitete Werkstücke 11 werden im Anschluss von der Handhabungseinrichtung 4 auf einem weiteren Werkstückspeicher 9 abgelegt. Die Darstellung in Figur 1 zeigt beispielhaft lediglich jeweils einen Werkstückspeicher 7 und 9, jedoch ist die Anordnung von mehreren Werkstückspeichern 7, 9 aus ökonomischen Gründen sinnvoll.

Des Weiteren zeigt die Darstellung in Fig. 1 eine Speichereinrichtung 8, welche der Aufnahme und Bereitstellung zumindest eines auswechselbaren Werkzeugs 14 des Bearbeitungssystems 1 dient. Die Speichereinrichtung 8 wird der Biegezelle 20 für die Dauer des Rüstens des Bearbeitungssystems 1 zugeführt. Die Platzierung der Speichereinrichtung 8 erfolgt im Arbeitsraum 17 der Handhabungsvorrichtung 4, jedoch ortsunabhängig. Das heißt, die Speichereinrichtung 8 kann von einer Bedienperson an einer beliebigen freien Stelle im Arbeitsraum 17 positioniert werden. Nach dem Rüsten wird die Speichereinrichtung 8 von der Bedienperson aus dem Arbeitsraum 17 entfernt, um diesen freizugeben und anderweitig nutzen zu können.

In Abhängigkeit von den jeweils für eine Serie zu fertigenden Werkstücken oder einer Wartung des Bearbeitungssystems 1 der Biegezelle 20 wird in unterschiedlichen Zeitabständen eine Neubestückung und damit ein Austausch der Werkzeuge 14 erforderlich. Strichliniert ist eine repositionierte Speichereinrichtung 8' dargestellt, welche für eine solche Umrüstung des Bearbeitungssystem 1 der Biegezelle 20 zugeführt wird. Die Speichereinrichtung 8' kann mit der Speichereinrichtung 8 identisch sein, sie wird jedoch an einem anderen Ort im Arbeitsraum 17 der Handhabungseinrichtung 4 positioniert, als dies bei dem vorangehenden Rüsten der Fall war. Die Abweichung der repositionierten Speichereinrichtung 8' von der vorherigen Position der Speichereinrichtung 8 kann dabei in ihrer Größenordnung sehr unterschiedlich ausfallen. So können Positionsabweichungen von wenigen Millimetern bereits dazu führen, dass die Handhabungseinrichtung 4 das Werkzeug 14 nicht so exakt lokalisieren kann, dass es von der Handhabungseinrichtung 4 zuverlässig aufgenommen werden kann. Von der Abweichung umfasst ist neben einer translatorischen Abweichung auch eine rotatorische Abweichung. Die repositionierte Speichereinrichtung 8' kann der Aufnahme der Werkzeuge dienen, welche ausgetauscht werden. Die Speichereinrichtung 8 bzw. 8', ist mit zumindest einer Markierung 13 versehen, welche dem Erkennen und Auffinden der Speichereinrichtung 8 bzw. 8' durch die Handhabungseinrichtung 4 dient.

Das Informationssystem 3 ist durch ein Bussystem 12 mit der Handhabungseinrichtung 4 sowie der dieser zugeordneten Detektionseinrichtung 6 signal- und steuerungstechnisch verbunden. Durch das Informationssystem 3 werden sowohl das Bearbeitungssystem 1 der Biegezelle 20 als auch die Handhabungseinrichtung 4 gesteuert bzw. geregelt.

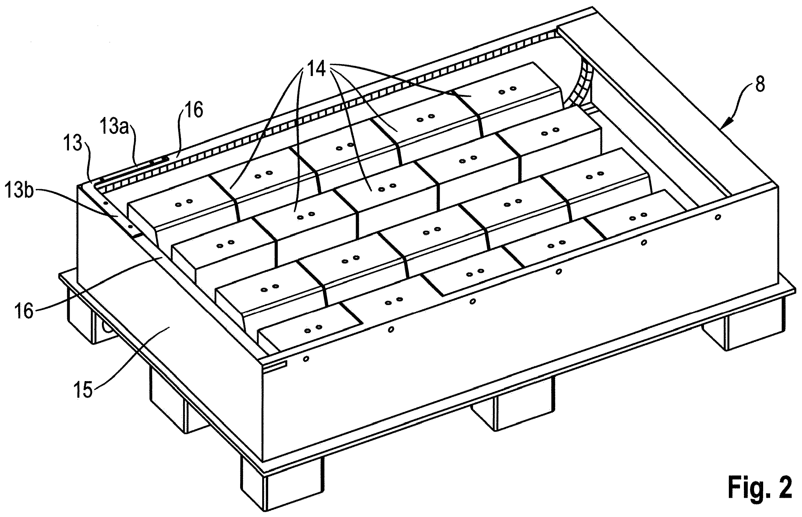

Fig. 2 zeigt eine schematische Ansicht einer mit Werkzeugen 14 bestückten Speichereinrichtung 8. Die Speichereinrichtung 8 weist wenigstens einen separierten Bereich zur Aufnahme eines einzelnen Werkzeugs 14 auf. Die separierten Bereiche können durch eine zueinander beabstandete Anordnung der Werkzeuge 14 realisiert werden sowie durch eine zusätzliche räumliche Trennung durch Abgrenzungsmittel wie Wände. Weiterhin ist eine Rasterung der Aufstandsfläche der Speichereinrichtung 8 denkbar, auf denen die Werkzeuge 14 abgelegt sind. Die Rasterung kann durch farbige Verläufe hervorhebbar sein. Die Speichereinrichtung 8 weist einen umlaufenden, sich im Wesentlichen vertikal erstreckenden, Rahmen 15 auf, Der Rahmen 15 ist abschnittsweise mit einer flächig ausgebildeten, zu dem Rahmen 15 unter einem Winkel geneigt angeordneten, Oberkante 16 ausgebildet. Die Oberkante 16 erstreckt sich im Wesentlichen senkrecht zu dem Rahmen 15. Die Oberkante 16 ist an zumindest einer Stelle mit der zumindest einen Markierung 13 versehen, welche dem Erkennen der Speichereinrichtung 8 dient. In dem dargestellten Ausführungsbeispiel ist die zumindest eine Markierung 13 als ein flaches, im Wesentlichen L-förmiges Element ausgebildet, welches die Form des zu bearbeitenden Werkstücks hat. Die zumindest eine Markierung 13 ist auf einem korrespondierend geformten Abschnitt der Oberkanten 16 angeordnet. Dadurch ist die zumindest eine Markierung 13 in einer Ansicht im Wesentlichen von oben auf die Speichereinrichtung 8 bzw. 8' erkennbar.

Der zumindest einen Markierung 13 kommt darüber hinaus die Aufgabe zu, die Orientierung der Speichereinrichtung 8 relativ zu der Handhabungseinrichtung 4 erkennen zu können. Hierzu ist die zumindest eine Markierung 13 entsprechend gestaltet. In dem dargestellten Ausführungsbeispiel weist die zumindest eine Markierung 13 einen ersten Schenkel 13a und einen zweiten Schenkel 13b auf, welche einen Winkel von etwa 90° einschließen. Der erste Schenkel 13a und der zweite Schenkel 13b unterscheiden sich dabei zumindest hinsichtlich ihrer jeweiligen Breite. So ist der erste Schenkel 13a schmaler ausgeführt, als der zweite Schenkel 13b, so dass erkennbar ist, dass sich der erste Schenkel 13a in Längsrichtung der Speichereinrichtung 8 erstreckt, während der zweite Schenkel 13b sich in Querrichtung der Speichereinrichtung 8 erstreckt.

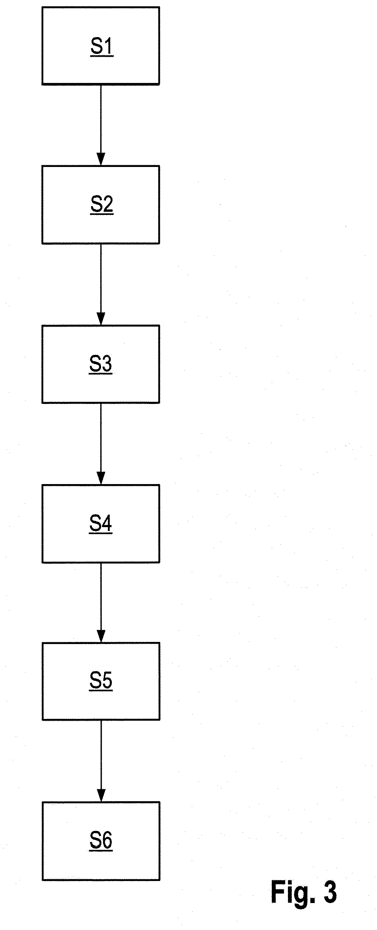

Die Darstellung in Fig. 3 zeigt ein Flussdiagramm zur Veranschaulichung eines automatisierten Werkzeugrüstprozesses, der sowohl das Ausrüsten als auch das Umrüsten des Bearbeitungssystems 1 durch die Handhabungseinrichtung 4 umfasst. In einem ersten Schritt S1 wird eine mit einem oder mehreren Werkzeugen 14 versehene Speichereinrichtung 8 in den Arbeitsraum 17 der Handhabungseinrichtung 4 verbracht.

In einem zweiten Schritt S2 wird von der optischen Detektionseinrichtung 6 eine dem Referenzieren dienende Aufnahme der Speichereinrichtung 8 und der darin enthaltenen Werkzeuge 14 gemacht. Die zumindest eine Markierung 13 ist in einer zur Empfangs- oder Bildebene der optische Detektionseinrichtung 6 parallelen Ebene an der Speichereinrichtung angeordnet.

In einem dritten Schritt S3 werden mittels dieser Referenzaufnahme den Werkzeugen 14 relative Koordinaten zugeordnet, welche auf die zumindest eine Markierung 13, deren Geometrie der der Werkstücke 10 entsprechen kann, als Bezugspunkt bezogen sind. Hierzu wird durch das Informationssystem 3 die Referenzaufnahme mittels des Programms zur Bildauswertung ausgewertet, welches auch bei der Bestimmung der Lage der zu bearbeitenden Werkstücke 10 verwendet wird. Das Informationssystem 3 speichert die relativen Koordinaten der Lage der Werkstücke 14 und den von der zumindest einen Markierung 13 gebildeten Bezugspunkt ab. Da die zumindest eine Markierung 13 der Geometrie eines zu bearbeitenden Werkstücks 10 entspricht, bedarf es keiner zusätzlichen Bildauswertung, die an die Ausgestaltung der zumindest einen Markierung 13 angepasst ist.

In Schritt S4 erfolgt das Ausrüsten des Bearbeitungssystems 1 mit dem Werkzeug 14. Im Anschluss daran wird die Speichereinrichtung 8 aus dem Arbeitsraum 17 der Handhabungseinrichtung 4 entfernt, um die freiwerdende Fläche beispielsweise für zusätzliche Werkstückspeicher 7, 9 zu nutzen.

In einem fünften Schritt S5 wird das Bearbeitungssystem 1 umgerüstet, wofür die Speichereinrichtung 8' zur Aufnahme des bisher in dem Bearbeitungssystem 1 befindlichen Werkzeugs 14 und/oder der Beistellung von neuem Werkzeug 14 in dem Arbeitsraum 17 der Handhabungseinrichtung 4 repositioniert wird.

In einem Schritt S6 wird die im Arbeitsraum 17 repositionierte Speichereinrichtung 8'erneut von der Detektionseinrichtung 6 fotografiert. Durch das Informationssystem 3 wird die zumindest eine Markierung 13 an der Speichereinrichtung 8' auf der Aufnahme wiedererkannt. Mittels des Programms zur Bildauswertung lässt sich auf eine gegenüber der Referenzaufnahme abweichende Orientierung respektive rotatorische Abweichung der repositionierten Speichereinrichtung 8' schließen. Mit der Detektion des durch die zumindest eine Markierung 13 gebildeten Bezugspunktes und den in dem Informationssystem 3 gespeicherten, auf diesen mit der Referenzaufnahme bestimmten Bezugspunkt bezogenen, relativen Koordinaten der Werkzeuge 14 lässt sich die Handhabungseinrichtung 4 zuverlässig ansteuern, um das Werkzeug aus der Speichereinrichtung 8' sicher aufzunehmen.

### Bezugszeichenliste

- 1: Bearbeitungssystem
- 2: Materialflusssystem
- 3: Informationssystem
- 4: Handhabungseinrichtung
- 5: Verfahrweg
- 6: Detektionseinrichtung
- 7: Werkstückspeicher
- 8: Speichereinrichtung
- 8': Speichereinrichtung
- 9: Werkstückspeicher
- 10: Werkstück
- 11: Werkstück
- 12: Bussystem
- 13: Markierung
- 13a: Erster Schenkel
- 13b: Zweiter Schenkel
- 14: Werkzeug
- 15: Rahmen
- 16: Oberkante
- 20: Biegezelle

- S1: Erster Schritt
- S2: Zweiter Schritt
- S3: Dritter Schritt
- S4: Vierter Schritt
- S5: Fünfter Schritt
- S6: Sechster Schritt

## Patentansprüche

1. Fertigungszelle (20), bestehend aus einem Bearbeitungssystem (1), einem Materialflusssystem (2) und einem Informationssystem (3), wobei das Materialflusssystem (2) eine von dem Informationssystem (3) angesteuerte Handhabungseinrichtung (4) umfasst, die zu einer automatischen Auswechslung von Werkzeug (14) des Bearbeitungssystems (1) eingerichtet ist, welches dem Materialflusssystem (2) durch eine Speichereinrichtung (8, 8') zuführbar ist, **dadurch gekennzeichnet,**
- **dass** die Speichereinrichtung (8,8') im Arbeitsraum (17) der Handhabungseinrichtung (4) für die Dauer eines Rüstvorganges positionierbar ist,
- **dass** die Handhabungseinrichtung (4) eine optische Detektionseinrichtung (6) aufweist, welche zur Erfassung zumindest einer an der Speichereinrichtung (8, 8') angeordneten Markierung (13) sowie zur Erfassung der Anordnung von einem oder mehreren in der Speichereinrichtung (8, 8') angeordneten Werkzeugen (14) eingerichtet ist, und
- **dass** durch das Informationssystem (3) die relative Lage des wenigstens einen Werkzeugs (14) bezogen auf die zumindest eine wiedererkannte Markierung an der Speichereinrichtung bei einer ortsunabhängigen Repositionierung (13) der Speichereinrichtung (8, 8') bestimmbar ist.

2. Fertigungszelle (20) nach Anspruch 1, **dadurch gekennzeichnet, dass** die zumindest eine Markierung (13) in einer Ansicht im Wesentlichen von oben auf die Speichereinrichtung (8, 8') erkennbar ist.

3. Fertigungszelle (20) nach Anspruch 1 oder 2, **dadurch gekennzeichnet, dass** die zumindest eine Markierung (13) in einer zur Empfangs- oder Bildebene der optische Detektionseinrichtung (4) parallelen Ebene an der Speichereinrichtung (8, 8') angeordnet ist.

4. Fertigungszelle (20) nach einem der Ansprüche 1 bis 3, **dadurch gekennzeichnet, dass** die zumindest eine Markierung (13) eine optisch auswertbare Information über die Orientierung der Speichereinrichtung (8, 8') relativ zu der Handhabungseinrichtung (4) aufweist.

5. Fertigungszelle (20) nach einem der vorangehenden Ansprüche, **dadurch gekennzeichnet, dass** die optische Detektionseinrichtung (6) als eine Kamera ausgebildet ist.

6. Fertigungszelle (20) nach einem der vorangehenden Ansprüche, **dadurch gekennzeichnet, dass** die Speichereinrichtung (8, 8') wenigstens einen separierten Bereich zur Aufnahme eines einzelnen Werkzeugs (14) aufweist.

7. Fertigungszelle (20) nach einem der vorangehenden Ansprüche, **dadurch gekennzeichnet, dass** die Speichereinrichtung einen umlaufenden Rahmen (15) mit einer abschnittsweise flächig ausgebildeten, zu dem Rahmen (15) unter einem Winkel geneigt angeordneten, Oberkante (16) aufweist.

8. Fertigungszelle (20) nach Anspruch 6 oder 7, **dadurch gekennzeichnet, dass** die zumindest eine Markierung (13) an zumindest einem Abschnitt der Oberkante (16) angeordnet ist.

9. Fertigungszelle (20) nach einem der vorangehenden Ansprüche, **dadurch gekennzeichnet, dass** die Handhabungseinrichtung (4) entlang einer definierbaren Bahn (5) ortsveränderbar beweglich ist.

10. Fertigungszelle (20) nach einem der vorangehenden Ansprüche, **dadurch gekennzeichnet, dass** die Fertigungszelle als Biegezelle (20) ausgebildet ist.

11. Verfahren zum automatischen Rüsten einer Fertigungszelle (20), bestehend aus einem Bearbeitungssystem (1), einem Materialflusssystem (2) und einem Informationssystem (3), wobei das Materialflusssystem (2) eine Handhabungseinrichtung (4) umfasst, die von dem Informationssystem (3) angesteuert wird, wobei durch die Handhabungseinrichtung (4) eine automatischen Auswechslung eines Werkzeugs (14) des Bearbeitungssystems (1) durchgeführt wird, welches dem Materialflusssystem (2) durch eine Speichereinrichtung (8, 8') bereitgestellt wird, **dadurch gekennzeichnet,**
- **dass** in einem ersten Schritt (S1) die mit wenigstens einem auszuwechselnden Werkzeug (14) bestückte, mit zumindest einer Markierung (13) versehene Speichereinrichtung (8) im Arbeitsraum (17) der Handhabungseinrichtung (4) für die Dauer eines Rüstvorganges ortsunabhängig positioniert wird,
- **dass** in einem zweiten Schritt (S2) die zumindest eine Markierung (13) sowie die Anordnung des wenigstens einen Werkzeugs (14) in der Speichereinrichtung (8) relativ zu der Markierung (13) optisch erfasst werden, und
- **dass** die zumindest eine Markierung (13) als relativer Bezugspunkt zur Positionsbestimmung des wenigstens einen in der Speichereinrichtung (8') angeordneten Werkzeugs (14) bei einer ortsunabhängigen Repositionierung der Speichereinrichtung (8) verwendet wird.

12. Verfahren nach Anspruch 11, **dadurch gekennzeichnet, dass** die Lage des wenigstens einen Werkzeugs (14) bezogen auf die zumindest einen Markierung (13) als Koordinaten eines relativen Koordinatensystems gespeichert werden.

13. Verfahren nach Anspruch 11 oder 12, **dadurch gekennzeichnet, dass** nach der Repositionierung der Speichereinrichtung (8) ein Bild der Speichereinrichtung (8') aufgenommen und mittels der zumindest einen Markierung (13) die relative Lage der repositionierten Speichereinrichtung (8') bestimmt wird.

14. Verfahren nach einem der Ansprüche 11 bis 13, **dadurch gekennzeichnet, dass** eine Detektierung der zumindest einen Markierung (13) durch ein Bildauswertungsprogramm erfolgt, welches zur Detektion der Lage von zu bearbeitenden Werkstücken (10) verwendet wird.
